# EUROPÄISCHE PATENTSCHRIFT

(11) **EP 3 984 863 B1**
(45) Veröffentlichungstag und Bekanntmachung des Hinweises auf die Patenterteilung: **24.12.2025**
(21) Anmeldenummer: 20201752.1
(22) Anmeldetag: 14.10.2020
(51) Int. Cl.: B62D 13/00, B62D 47/02

(54) **LENKUNGSSTEUERUNGSSYSTEM EINES MEHRGLIEDRIGEN FAHRZEUGS**
STEERING CONTROL SYSTEM FOR A MULTI-PART VEHICLE
SYSTÈME DE COMMANDE DE DIRECTION D'UN VÉHICULE À UNITÉS MULTIPLES

(43) Veröffentlichungstag der Anmeldung: 20.04.2022
(73) Patentinhaber: Hübner GmbH & Co. KG, 34123 Kassel (DE)
(72) Erfinder: Bittroff, Uwe, 34246 Vellmar (DE)

(56) Entgegenhaltungen:
- EP-A1- 3 363 274
- EP-A2- 1 847 442
- DE-A1- 102010 027 118
- US-A1- 2013 187 361
- US-A1- 2018 022 405
- US-A1- 2018 304 944

## Beschreibung

Die Erfindung betrifft ein Lenkungssteuersystem zum Steuern der Lenkung eines mehrgliedrigen Fahrzeugs mit mehreren beweglich miteinander verbundenen Fahrzeugteilen mit den Merkmalen des Oberbegriffs von Anspruch 1. Demgemäß weist das Lenkungssteuersystem eine erste Achssteuereinheit zur Anordnung in Verbindung mit einer ersten lenkbaren Achseinheit und wenigstens eine zweite Achssteuereinheit zur Anordnung in Verbindung mit wenigstens einer zweiten lenkbaren Achseinheit auf. Weiterhin betrifft die Erfindung ein mehrgliedriges Fahrzeug mit mehreren beweglich miteinander verbundenen Fahrzeugteilen und mehreren lenkbaren Achseinheiten sowie einem solchen Lenkungssteuersystem. Schließlich betrifft die Erfindung ein Verfahren zum Aufbau eines Lenkungssteuersystems.

### STAND DER TECHNIK

Aus dem Dokument DE 10 2017 112 183 A1 ist ein Lenkungssteuersystem zur Lenkung mindestens einer Hinterachse eines mehrgliedrigen Fahrzeugs mit einer ersten Steuereinrichtung bekannt, wobei die erste Steuereinrichtung eine erste Eingangsschnittstelle zur Übernahme von einem Vorderachslenkwinkeldatum des Fahrzeugs und einem Fahrzeuggeschwindigkeitsdatum des Fahrzeugs aufweist, wobei die erste Steuereinrichtung ein Sollwertmodul zur Bestimmung eines ersten Soll-Hinterachslenkwinkeldatums auf Basis des Fahrzeuggeschwindigkeitsdatums und des Vorderachslenkwinkeldatums aufweist. Ferner ist eine zweite Steuereinrichtung vorgesehen, wobei die zweite Steuereinrichtung eine zweite Eingangsschnittstelle zur Übernahme von dem Vorderachslenkwinkeldatum und dem Fahrzeuggeschwindigkeitsdatum aufweist, wobei die zweite Steuereinrichtung ein Parallelmodul zur Bestimmung eines zweiten Soll-Hinterachslenkwinkeldatums auf Basis des Fahrzeuggeschwindigkeitsdatums und des Vorderachslenkwinkeldatums bildet. Ein achsenweise aufgeteilter Steuerungsaufbau, der modulartig erweiterbar ist, ist aufgrund des starren Aufbaus nicht möglich.

Aus dem Dokument DE 10 2006 037 588 A1 ist ein Verfahren zur Mehrachslenkung für mehrgliedrige Straßenfahrzeuge mit mehreren lenkbaren Achseinheiten über ausgegebene Steuersignale mittels eines Lenkungssteuersystems bekannt. Bei der Berechnung der Steuersignale werden online gemessene Fahrzeuggrößen wie die Fahrzeuggeschwindigkeit und die Sollwegtrajektorie einbezogen. Die aufgrund von Störungen oder anderen Einflüssen unvermeidbaren Querabweichungen zwischen der Sollwegtrajektorie und der tatsächlichen Fahrzeugposition, die durch die Lage der Mittelpunkte der Lenkachsen beschrieben wird, werden gemessen und durch unterlagerte Regelkreise an jeder Lenkachse ausgeregelt. Nachteilhaft ist bei dem gezeigten Aufbau die starre und nicht erweiterbare Anordnung der Komponenten aus mehreren über- und untergeordneten Steuerorganen.

Weitere Lenkungssteuersysteme sind aus der EP 1 847 442 A2, der DE 10 2010 027 118 A1, der EP 3 363 274 A1 und der US 2013/1 87361 A1, der dem Oberbegriff des Anspruchs 1 entspricht, bekannt. Aber auch die dort offenbarten Lenkungssteuersysteme sind starr ausgebildet und nicht flexibel erweiterbar.

### OFFENBARUNG DER ERFINDUNG

Aufgabe der Erfindung ist es, ein Lenkungssteuersystem zum Steuern der Lenkung eines mehrgliedrigen Fahrzeugs mit mehreren beweglich miteinander verbundenen Fahrzeugteilen und mehreren lenkbaren Achseinheiten der Lenkung eines mehrgliedrigen Fahrzeugs zu schaffen, das hinsichtlich der Einsetzbarkeit flexibel ist, insbesondere ohne dass sich hierdurch die Gesamtkomplexität des Systems erhöht und/oder Einbußen hinsichtlich der Genauigkeit und/oder Sicherheit der Lenkungssteuerung in Kauf genommen werden müssen. Insbesondere soll ein Lenkungssteuersystem geschaffen werden, das einen modulartigen Aufbau aufweist und für Fahrzeuge mit wahlweise mehr oder weniger Achseinheiten eingesetzt werden kann.

Die erfindungsgemäße Aufgabe wird gelöst durch ein System mit den Merkmalen des unabhängigen Anspruchs 1. Ferner wird die erfindungsgemäße Aufgabe gelöst durch ein mehrgliedriges Fahrzeug mit den Merkmalen des unabhängigen Anspruchs 9 sowie ein Verfahren zum Aufbau eines Lenkungssteuersystems mit den Merkmalen des unabhängigen Anspruchs 10.

Erfindungsgemäß wurde erkannt, dass beim Bau sogenannter Straßenbahnen auf Rädern Lenkungssteuersysteme notwendig sind, die die Achssteuereinheiten an den lenkbaren Achseinheiten einzeln ansteuern können, sodass diese Achseinheit die für eine zu fahrende Trajektorie richtige Lenkwinkelstellung einnimmt. Dafür muss die Achssteuereinheit jeder der angesteuerten Achseinheiten mit spezifisch berechneten Lenkwinkeldaten versorgt werden, wobei zugleich von den Achsen aktuelle Achsinformationen an eine Steuerung übermittelt werden. Dabei soll ein Lenkungssteuersystem bereitgestellt werden, das unabhängig von der Anzahl der lenkbaren Achseinheiten und ohne größeren Anpassungsaufwand für verschieden lange Straßenbahnen auf Rädern mit einer variablen Anzahl von Fahrzeugteilen in Betrieb genommen werden kann. Gerade bei Straßenbahnen gibt es regional sehr unterschiedliche Anforderungen, wobei die Anforderungen auch streckenabhängig oder abhängig von der Tageszeit verschieden sein können. Daher ist gerade bei solchen Fahrzeugsystemen ein hohes Maß an Flexibilität erforderlich. Mit dem erfindungsgemäßen Lenkungssteuersystem kann gerade diese Flexibilität gewährleistet werden, insbesondere ohne Einschränkung der Fahrzeugsicherheit.

Erfindungsgemäß ist vorgesehen, dass das Lenkungssteuersystem ein Zentralsteuermodul aufweist, welches mit den mehreren Achssteuereinheiten über eine gemeinsame Datenleitung zum Austausch von Lenkwinkeldaten verbunden ist, wobei die Achssteuereinheiten zur Kommunikation über die Datenleitung Datenschnittstellen aufweisen, die zur Übertragung zueinander identischer Datenformate ausgebildet sind, wodurch das Lenkungssteuersystem mit einer variablen Anzahl von einbindbaren Achssteuereinheiten modular aufbaubar ist.

Mit dem erfindungsgemäß weitergebildeten Lenkungssteuersystem wird der Vorteil geschaffen, dass die wesentlichen Steuerungsaufgaben lokal im Zentralsteuermodul abgearbeitet werden können, während die Achssteuereinheiten, die in Verbindung mit den Achseinheiten angeordnet sind, im Wesentlichen periphere Informationen abarbeiten, die unmittelbar mit der Sensorik und Aktorik der Achseinheit selbst notwendig sind. Die eigentliche Steuerungsinformation kann somit im Zentralsteuerungsmodul erzeugt werden, um schließlich die Achssteuereinheiten mit der Lenkungsinformation zu versorgen. Zugleich kann von den Achssteuereinheiten die jeweilige aktuelle Achssteuerinformation an das Zentralsteuermodul übermittelt werden.

Der wesentliche Vorteil wird auch dadurch erreicht, dass die Achssteuereinheiten voneinander unabhängig betrieben werden können, da diese im Wesentlichen mit dem Zentralsteuermodul nur noch Daten austauschen, sodass es für die Funktion des Lenkungssteuersystems unerheblich ist, wie viele Achssteuereinheiten schließlich an das System angebunden sind. Mit anderen Worten kann im einfachsten Fall ein Lenkungssteuersystem gemäß der Erfindung aufgebaut werden aus einem Zentralsteuermodul und einer oder mehreren Achssteuereinheiten, die einer jeweiligen Achse zugeordnet sind. Um diese vergleichsweise einfache Architektur innerhalb des Lenkungssteuersystems zu schaffen, sind die Datenschnittstellen der Achssteuereinheiten insbesondere gleich oder identisch zueinander ausgebildet, sodass das Zentralsteuermodul nicht an die Anzahl der Achseinheiten angepasst werden muss. Der Datenaustausch des Zentralsteuermoduls mit den Achssteuereinheiten kann derart normiert erfolgen, dass das Lenkungssteuersystem beliebig erweiterbar oder beliebig reduzierbar ist betreffend die Anzahl der Achssteuereinheiten. Insbesondere bedürfen die Datenschnittstellen aufgrund ihrer zueinander gleichen Ausgestaltung in Verbindung mit der Datenleitung und insbesondere in Verbindung mit dem Zentralsteuermodul keinen zugeordneten Steckplätzen in mechanisch-technischer Hinsicht oder keine gesondert zugeordnete Programmierung in elektrischer Hinsicht.

Die erfindungsgemäß zueinander gleich ausgeführten Datenschnittstellen sind so ausgestaltet, dass die Datenformate der Datenschnittstellen der mehreren Achssteuereinheiten von jeder einzelnen Achssteuereinheit gelesen werden können. Dabei können einzelne oder alle Datenschnittstellen zueinander gleich und insbesondere identisch ausgestaltet sein. D. h. die Datenschnittstellen der mehreren Achssteuereinheiten können in baulicher, geometrischer, mechanischer, elektrischer und/oder informatorischer Hinsicht gleich bzw. identisch ausgebildet sein. Z. B. können die Datenschnittstellen eine gleiche Pin-Belegung einer Steckereinheit und eine zueinander gleiche, insbesondere identische Geometrie aufweisen, sodass die Steckereinheiten untereinander austauschbar sind. Jedoch ist insbesondere in elektrischer Hinsicht die Identität der Datenschnittstellen zueinander vorgesehen, sodass die mehreren Datenschnittstellen der mehreren Achssteuereinheiten jeweils zueinander identische Datenformate mit dem Zentralsteuermodul austauschen können. So wird der modulare Aufbau des Lenkungssteuersystems mit einer variablen Anzahl von Achssteuereinheiten mit einer entsprechend variablen Anzahl von Achseinheiten ermöglicht. Folglich kann ein Fahrzeug mit unterschiedlich vielen Fahrzeugteilen aufgebaut werden, und es können Fahrzeugteile auch ohne großen Aufwand entnommen oder hinzugefügt werden, beispielsweise um die Straßenbahn auf Rädern einem aktuellen Beförderungsbedarf kurzfristig anpassen zu können.

Gemäß einer Ausführungsform sind die Achssteuereinheiten in baulicher, geometrischer, mechanischer, elektrischer und/oder informatorischer Hinsicht identisch zueinander ausgebildet. Die Achssteuereinheiten können in Bezug auf eine Fahrzeugfahrrichtung insofern für eine vorderste Achseinheit, für eine mittlere Achseinheit oder eine hintere Achseinheit Anwendung finden, und die Achseinheit ist insbesondere aktiv angelenkt. Auch kann die Achseinheit mit einer Lenkungseinheit versehen sein, welche z. B. von einem Fahrer oder einer autonomen Fahreinrichtung des Fahrzeugs gesteuert ist. Die Achssteuereinheit einer solchen Achseinheit mit Lenkungseinheit kann in einer der voranstehend genannten Weisen identisch ausgebildet sein zu Achssteuereinheiten ohne Lenkungseinheit. Die Achssteuereinheit einer Achseinheit mit Lenkungseinheit kann aber auch zusätzliche Funktionen umfassen. Diese zusätzlichen Funktionen können dabei insbesondere selektiv aktiviert bzw. deaktiviert werden, z. B. in Abhängigkeit davon, ob die Achseinheit als eine Achseinheit mit oder ohne Lenkungseinheit fungieren soll.

Gemäß einer Ausführungsform des Lenkungssteuersystems werden von jeder Achssteuereinheit achsspezifische Lenkwinkel-Istdaten an das Zentralsteuermodul übermittelt und/oder von dem Zentralsteuermodul werden achsspezifische Lenkwinkel-Solldaten an jede der Achssteuereinheiten übermittelt. Gemäß einem besonders vorteilhaften Aspekt der Erfindung werden im Allgemeinen über die Datenleitungen hauptsächlich oder ausschließlich Lenkwinkel-Informationen ausgetauscht, also insbesondere die Lenkwinkel-Istdaten von den Achssteuereinheiten an das Zentralsteuermodul und/oder vom Zentralsteuermodul die Lenkwinkel-Solldaten an die Achssteuereinheiten. Selbstverständlich können auch beigeordnete Daten bzw. Informationen übermittelt werden, insbesondere wenn das Kommunikationssystem über die Datenleitung auf einem Bus-System beruht und die einzelnen Achssteuereinheiten mit diesen zugeordneten Datensequenzen adressiert werden müssen.

Das Zentralsteuermodul kann eine Steuerschnittstelle aufweisen, über die Fahrdaten des Fahrzeuges an das Zentralsteuermodul übermittelt werden, wobei die Fahrdaten wenigstens eine Fahrgeschwindigkeit, eine Fahrtrichtung und/oder eine Lenkinformation umfassen. Die Lenkinformation kann insbesondere von einer Lenkeinrichtung durch einen Fahrer und/oder von einer autonomen Fahreinrichtung des Fahrzeuges bereitgestellt werden. Die Ansteuerung der Achssteuereinheiten durch das Zentralsteuermodul erfolgt dabei insbesondere auf Grundlage und/oder in Abhängigkeit der Fahrdaten, die vom Fahrzeug an das Zentralsteuermodul über die Steuerschnittstelle aufgegeben werden. Beispielsweise ist eine mit dem Zentralsteuermodul berechnete Lenkwinkelverstellung bei größeren Fahrgeschwindigkeiten kleiner als bei niedrigen Fahrgeschwindigkeiten.

Die Lenkinformationen können von einer Lenkeinrichtung aufgegeben werden, wobei insbesondere ein Steer-by-Wire System Anwendung finden kann, vermittels dem ein Fahrer des Fahrzeuges ein Lenkrad bedient. Dabei werden die Lenkinformationen mittels eines Lenkungserfassungssensors als Lenkinformationen bereitgestellt und über die Steuerschnittstelle dem Zentralsteuermodul zugeführt. Dabei kann die Lenkinformation, die ein Fahrer oder eine autonome Fahreinrichtung vorgibt, an einer Achseinheit selbst abgegriffen werden. Gemäß einer Ausführungsform wird diese Lenkinformation zunächst an das Zentralsteuermodul übermittelt, um schließlich die Achseinheit anzulenken, an der die Lenkeinrichtung angeordnet ist. , Die weiteren Achsen werden auf gleiche Weise mit entsprechenden Informationen angesteuert. Mit anderen Worten wird ein mehrgliedriges Fahrzeug bei dieser Ausführungsform mittels einer Lenkinformation durch einen Fahrer oder durch eine autonome Fahreinrichtung nicht mehr an einer beispielsweise vorderen Achseinheit gelenkt, sondern die Lenkinformation erreicht über das Zentralsteuermodul jede einzelne Achseinheit, sodass basierend auf der Lenkinformation ein durch das Zentralsteuermodul berechneter Soll-Lenkeinschlag für jede Achseinheit ausgeführt wird. Es ist jedoch auch möglich, dass die Lenkinformation direkt von der entsprechenden Achssteuereinheit der Achseinheit mit der Lenkeinrichtung verarbeitet wird und diese Achseinheit direkt entsprechend der Lenkinformation gelenkt wird. Gleichzeitig wird die Lenkinformation an das Zentralsteuermodul übermittelt, das die Lenkinformation ebenfalls verarbeitet und entsprechende Lenkwinkeldaten an die anderen Achssteuereinheiten ausgibt. Gemäß einer weiteren Möglichkeit kann die Lenkinformation von einem Steer-By-Wire-System oder einem Lenkrad auch direkt dem Zentralsteuermodul zugeführt werden. Das Zentralsteuermodul verarbeitet die Lenkwinkelinformation und übermittelt entsprechende Lenkwinkeldaten an die einzelnen Achssteuereinheiten.

Das Zentralsteuermodul kann über die Steuerschnittstelle oder eine weitere Schnittstelle Zentralsteuermoduldaten an eine Fahrzeugsteuerung oder deren Subsysteme ausgeben. Z. B. können Statusinformationen und/oder Fehlermeldungen von dem Zentralsteuermodul an das Fahrzeug bzw. dessen Fahrzeugsteuerung gesendet werden. Darüber hinaus ist es möglich, dass von dem Zentralsteuermodul Brems-, Geschwindigkeits- und/oder Leistungsanforderungen ausgeben werden, die z. B. im Rahmen der Brems- und/oder Motorsteuerung des Fahrzeugs verarbeitet werden. Mit dem Zentralsteuermodul kann somit auch auf die Gesamtsteuerung des Fahrzeugs Einfluss genommen werden. Z. B. kann in einem Fehlerfall von dem Zentralsteuermodul eine Geschwindigkeitsbegrenzung vorgegeben werden.

Gemäß einer Ausführungsform weisen die lenkbaren Achseinheiten Achseinrichtungen auf, umfassend wenigstens einen Lenkaktor, wenigstens einen Sensor, wenigstens eine Hydraulikeinheit und/oder wenigstens eine elektronische Achsbetriebssicherheitseinrichtung, wobei die Achssteuereinheit der lenkbaren Achseinheit die Achseinrichtungen autonom steuert und/oder überwacht. Der Informationsaustausch beispielsweise zwischen Sensoren und Aktoren der Achseinheit selbst erfolgt innerhalb der Achseinheit mit der Achssteuereinheit, ohne dass diese Informationen zwingend über die Datenleitung an das Zentralsteuermodul übersandt werden müssen. Jedoch ermittelt die Achssteuereinheit Ist-Daten über insbesondere den aktuellen Lenkwinkel, die über die Datenleitung dem Zentralsteuermodul bereitgestellt werden. Erhält beispielsweise die Achssteuereinheit eine Vorgabe von Lenkwinkel-Solldaten durch das Zentralsteuermodul, so kann die Achssteuereinheit vermittels einer Kommunikation mit den Sensoren und den Aktoren der Achseinheit, insbesondere der Hydraulikeinheit und/oder dem Lenkaktor, die Aktivierung der Achseinheit vornehmen, sodass schließlich über die Datenschnittstelle der Achssteuereinheit eine sich einstellende Lenkwinkel-Istinformation an das Zentralsteuermodul zurück übermittelt werden kann. Somit kann ein Regelkreis aufgebaut werden, in dem eine getaktete Abfrage der Lenkwinkel-Istdaten von den Achssteuereinheiten erfolgt, wobei die Lenkwinkel-Istdaten im Zentralsteuermodul in einem entsprechenden Programm verarbeitet werden. Der Regelkreis beinhaltet dabei auch die Ausgabe von Lenkwinkel-Solldaten an die Achssteuereinheiten, um Korrekturwerte zu ermitteln und entsprechende Korrekturen vorzunehmen. Das periodisch wiederholte Ermitteln von Korrekturwerten und Auslösen derartiger Korrekturen führt schließlich zur Ausführung der entsprechenden Lenkwinkeleinstellung, die jede Achseinheit individuell einstellt, wobei die Einstellungen vom Zentralsteuermodul überwacht werden.

Zur Erhöhung der Funktionssicherheit ist insbesondere vorgesehen, dass die Achssteuereinheit wenigstens zwei zueinander redundant ausgebildete und betreibbare Recheneinheiten aufweist, insbesondere kann auch das Zentralsteuermodul wenigstens zwei und bevorzugt drei zueinander redundant ausgebildete und betreibbare Zentralrecheneinheiten aufweisen. Alternativ oder zusätzlich kann zur Erhöhung der Funktionssicherheit des Lenkungssteuersystems vorgesehen sein, dass die Datenleitung und die jeweiligen Datenschnittstellen der Achssteuereinheiten zueinander redundant ausgebildete Datenübertragungsmittel aufweisen. Das System ist damit insbesondere so aufgebaut, dass hinsichtlich der Zentralrecheneinheiten des Zentralsteuermoduls und hinsichtlich der Recheneinheiten der Achssteuereinheiten Vergleichsanalysen ausgeführt werden können. Bei einer Abweichung der ermittelten Informationen aus den einzelnen Recheneinheiten oder aus den einzelnen Zentralrecheneinheiten voneinander kann so eine nochmalige Überprüfung der Plausibilität der Informationen erfolgen, was insbesondere mit drei redundant eingerichteten und betriebenen Einheiten möglich wird. Dabei ist es insbesondere vorteilhaft, wenn die Recheneinheiten der Achssteuereinheit oder die Zentralrecheneinheiten des Zentralsteuermoduls unterschiedliche Hardwarekonfigurationen aufweisen, um systemische Fehlereinflüsse auszuschließen. Im Ergebnis kann ein Lenkungssteuersystem bereitgestellt werden, das dem ASIL-D Standard genügt.

Zur Erhöhung der Betriebssicherheit des Lenkungssteuersystems weist das Zentralsteuermodul insbesondere ein oder mehrere Überwachungsmittel auf, mit dem/denen die Plausibilität der von den Achssteuereinheiten übermittelten Lenkwinkel-Istdaten überwacht wird. Ebenso ist es möglich, dass vorzugsweise jede Achssteuereinheit ein oder mehrere Überwachungsmittel aufweist, mit dem/denen die Plausibilität der von dem Zentralsteuermodul übermittelten Lenkwinkel-Solldaten überwacht wird. Die Überwachungsmittel können Mikrocontroller umfassen, in denen Vergleichsdaten abgelegt sind, wobei die Mikrocontroller die Lenkwinkel-Istdaten und die Lenkwinkel-Solldaten mit den Vergleichsdaten vergleichen. Fällt beispielsweise eine Lenkwinkelinformation der Istdaten oder der Solldaten aus einem Plausibilitätsbereich heraus, so kann mit dem Überwachungsmittel ein Vergleich zu den übrigen Informationen gezogen werden, insofern mit den Vergleichsdaten, die von den anderen Recheneinheiten der Achssteuereinheit oder von den anderen übrigen Zentralrecheneinheiten des Zentralsteuermoduls bereitgestellt werden.

Die Fahrzeugteile sind üblicherweise durch Gelenke miteinander verbunden. Die Gelenke können Gelenksteuereinrichtungen aufweisen, die ebenfalls an die Datenleitung angebunden und mit dem Zentralsteuermodul in Datenaustausch stehen können. Insbesondere können die Gelenke Winkelsensoren aufweisen, mit denen Gelenkwinkelinformationen erfasst und an das Zentralsteuermodul übersendet werden. Zur noch weiteren Erhöhung der Betriebssicherheit können die Gelenkwinkelinformationen davon unabhängig durch die Gelenksteuereinrichtung erfasst werden. Insbesondere kann ein Plausibilitätsabgleich der so erfassten Gelenkwinkelinformationen mit den Gelenkwinkelinformationen des Zentralsteuermoduls vorgenommen werden. Im Übrigen besteht auch die Möglichkeit, die Gelenkwinkelinformationen aus den Gelenken zwischen den Fahrzeugteilen dem Zentralsteuermodul zur Bestimmung der Lenkwinkel-Solldaten zuzuführen.

Das Zentralsteuermodul weist erfindungsgemäß ein softwarebasiertes fahrzeugspezifisches Bewegungsmodell auf, das dazu ausgebildet ist, die achsspezifischen Lenkwinkel-Solldaten zur Ausgabe an jede der Achssteuereinheiten auf Basis des fahrzeugspezifischen Bewegungsmodells zu ermitteln. Das fahrzeugspezifische Bewegungsmodell basiert dabei auf Fahrzeugdaten, insbesondere den Abmessungen und/oder der Masse des Fahrzeugs, auf Achsdaten, wie Achslasten und/oder der Zahl der lenkbaren und/oder nicht lenkbaren Achseinheiten und/oder auf Gelenkdaten, z. B. die Gelenkwinkel und/oder die Anzahl der Gelenke.

Die Erfindung richtet sich weiterhin auf ein mehrgliedriges Fahrzeug mit mehreren beweglich miteinander verbundenen Fahrzeugteilen und mehreren lenkbaren Achseinheiten, und mit einem Lenkungssteuersystem zum Steuern der Lenkung des mehrgliedrigen Fahrzeugs, wobei das Lenkungssteuersystem eine erste Achssteuereinheit, die in Verbindung mit einer ersten lenkbaren Achseinheit angeordnet ist, und wenigstens eine zweite Achssteuereinheit, die in Verbindung mit wenigstens einer zweiten lenkbaren Achseinheit angeordnet ist, aufweist. Insbesondere weist dabei das Lenkungssteuersystem ein Zentralsteuermodul auf, welches mit den mehreren Achssteuereinheiten über eine gemeinsame Datenleitung zum Austausch von Lenkwinkeldaten verbunden ist, wobei die Achssteuereinheiten zur Kommunikation über die Datenleitung Datenschnittstellen aufweisen, die zur Übertragung zueinander identischer Datenformate ausgebildet sind, wodurch das Lenkungssteuersystem mit einer variablen Anzahl von einbindbaren Achssteuereinheiten modular aufgebaut ist.

Das Zentralsteuermodul weist erfindungsgemäß ein softwarebasiertes fahrzeugspezifisches Bewegungsmodell auf, das dazu ausgebildet ist, die achsspezifischen Lenkwinkel-Solldaten zur Ausgabe an jede der Achssteuereinheiten auf Basis des fahrzeugspezifischen Bewegungsmodells zu ermitteln. Das fahrzeugspezifische Bewegungsmodell basiert dabei auf Fahrzeugdaten, insbesondere den Abmessungen und/oder der Masse des Fahrzeugs, auf Achsdaten, wie Achslasten und/oder der Zahl der lenkbaren und/oder nicht lenkbaren Achseinheiten und/oder auf Gelenkdaten, z. B. die Gelenkwinkel und/oder die Anzahl der Gelenke.

Hinsichtlich bevorzugter Ausführungsformen des mehrgliedrigen Fahrzeugs gelten die Ausführungen zu dem erfindungsgemäßen Lenkungssteuerungssystem entsprechend.

Die Erfindung betrifft weiterhin ein Verfahren zum Aufbau eines Lenkungssteuersystems, das zum Steuern der Lenkung eines mehrgliedrigen Fahrzeugs mit mehreren beweglich miteinander verbundenen Fahrzeugteilen und mehreren lenkbaren Achseinheiten eingerichtet ist, wobei das Verfahren wenigstens die folgenden Schritte aufweist: modulares Anordnen einer ersten Achssteuereinheit in Verbindung mit einer ersten lenkbaren Achseinheit, modulares Anordnen wenigstens einer zweiten Achssteuereinheit in Verbindung mit wenigstens einer zweiten lenkbaren Achseinheit, wobei die Achssteuereinheiten betreffend ihre Anbindung an eine Datenleitung untereinander austauschbar ausgebildet sind und wobei ein Zentralsteuermodul eingerichtet wird, das über die Datenleitung mit den Achssteuereinheiten Lenkinformationen austauscht, wobei bei Inbetriebnahme des Lenkungssteuersystems die Achssteuereinheiten unabhängig voneinander und unabhängig von ihrer Anzahl betrieben werden, indem diese mit einem Zentralsteuermodul über die gemeinsame Datenleitung kommunizieren.

Das Zentralsteuermodul weist erfindungsgemäß ein softwarebasiertes fahrzeugspezifisches Bewegungsmodell auf, mit welchem die achsspezifischen Lenkwinkel-Solldaten zur Ausgabe an jede der Achssteuereinheiten auf Basis des fahrzeugspezifischen Bewegungsmodells ermittelt werden. Das fahrzeugspezifische Bewegungsmodell basiert dabei auf Fahrzeugdaten, insbesondere den Abmessungen und/oder der Masse des Fahrzeugs, auf Achsdaten, wie Achslasten und/oder der Zahl der lenkbaren und/oder nicht lenkbaren Achseinheiten und/oder auf Gelenkdaten, z. B. die Gelenkwinkel und/oder die Anzahl der Gelenke.

Das Verfahren zeichnet sich insbesondere dadurch aus, dass die Achssteuereinheiten ausschließlich mit dem Zentralsteuermodul kommunizieren. D. h., dass die Achssteuereinheiten - anders als aus dem Stand der Technik bekannt - für die Lenkung der Achseinheiten nicht direkt untereinander Informationen austauschen und diese unmittelbar für die Lenkung der Achseinheiten verwenden. Vielmehr werden von den Achssteuereinheiten bereitgestellte Informationen lediglich in dem Zentralsteuermodul verarbeitet oder von diesem zur Verarbeitung weitergeleitet. Gleichzeitig werden in den Achseinheiten für die Lenkung der Achseinheiten ausschließlich die von dem Zentralsteuermodul bereitgestellten Daten genutzt.

Ferner ist vorgesehen, dass von jeder der Achssteuereinheiten achsspezifische Lenkwinkel-Istdaten an das Zentralsteuermodul übermittelt werden und/oder dass von dem Zentralsteuermodul achsspezifische Lenkwinkel-Solldaten an jede der Achssteuereinheiten übermittelt werden.

Im Rahmen der Erfindung kann das Verfahren insbesondere vorsehen, dass die Fahrzeugteile über Gelenke miteinander verbunden sind, wobei die Gelenke jeweils Gelenksteuereinrichtungen aufweisen, die Gelenkdaten an das Zentralsteuermodul übermitteln, die wenigstens eine der folgenden Informationen umfassen: Lenkwinkeldaten, Dämpfungsdaten, Knickwinkeldaten, Querversatzdaten, Querkraftdaten.

Hinsichtlich bevorzugter Ausführungsformen des erfindungsgemäßen Verfahrens gelten die Ausführungen zu dem erfindungsgemäßen Lenkungssteuerungssystem sowie dem mehrgliedrigen Fahrzeug entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Datenschnittstelle die Rede ist, so ist dies so zu verstehen, dass genau eine Datenschnittstelle, zwei Datenschnittstellen oder mehrere Datenschnittstellen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematisierte Ansicht eines Fahrzeuges mit mehreren Achseinheiten und mit einem Lenkungssteuersystem zur Ansteuerung der Achseinheiten,
- Figur 2: eine perspektivische Ansicht einer Achseinheit mit einer Achssteuereinheit,
- Figur 3: eine perspektivische Ansicht einer Achseinheit mit einer Achssteuereinheit und mit einer Lenkungseinrichtung und
- Figur 4: eine weitere schematische Ansicht des Fahrzeuges mit einem Lenkungssteuersystem aufweisend ein Zentralsteuermodul mit beispielhaft nur einer dargestellten Achssteuereinheit.

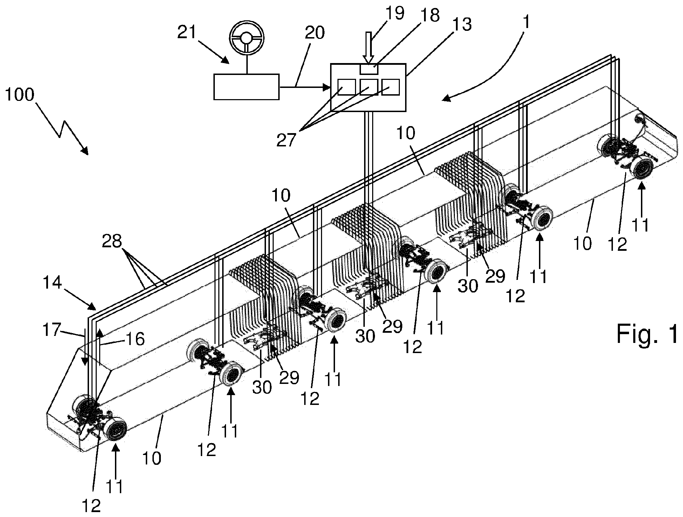

Das in Figur 1 gezeigte Fahrzeug 100 ist ausgeführt nach Art einer sogenannten Straßenbahn auf Rädern. Das Fahrzeug 100 weist mehrere Fahrzeugteile 10 auf, und die einzelnen Fahrzeugteile 10 weisen eine oder mehrere Achseinheiten 11 auf. Die Fahrzeugteile 10 sind mittels Gelenken 29 miteinander verbunden. Derartige Fahrzeuge 100 können besonders große Längen aufweisen und sind aus mehreren Fahrzeugteilen 10 aufgebaut.

In schematischer Darstellung ist ein Lenkungssteuersystem 1 gezeigt, das zur Anlenkung der mehreren Achssteuereinheiten 12 an den Achseinheiten 11 dient. Wird das Fahrzeug 100 in Bewegung versetzt, so muss jede Achseinheit 11 einen zuvor zu berechnenden Lenkwinkel einnehmen, um entlang einer gewünschten Trajektorie zu fahren, ohne dass einzelne Achseinheiten 11 aus der Trajektorie herausfahren, wodurch das Fahrzeug im schlimmsten Fall fahruntüchtig wird. Hierzu ist ein Steuerungssystem des Fahrzeuges 100 notwendig, dessen Aufbau im Folgenden näher beschrieben wird.

Das Lenkungssteuersystem 1 weist ein Zentralsteuermodul 13 auf, welches mit den Achssteuereinheiten 12 der Achseinheiten 11 zum Austausch von Lenkwinkeldaten über eine gemeinsame Datenleitung 14 verbunden ist. Die Datenleitung 14 weist zur Bildung einer Redundanz mehrere parallel geführte Datenübertragungsmittel 28 auf. Zur weiteren Erhöhung der Betriebssicherheit weist das Zentralsteuermodul 13 mehrere voneinander unabhängige Zentralrecheneinheiten 27 auf, die lediglich schematisch dargestellt sind.

Über eine Steuerschnittstelle 18 können Fahrdaten 19 dem Zentralsteuermodul 13 zugeführt werden, wobei die Fahrdaten 19 beispielsweise die Fahrtrichtung und die Fahrgeschwindigkeit des Fahrzeuges 100 betreffen. Weiterhin werden Lenkinformationen 20 dem Zentralsteuermodul 13 zugeführt, die über eine Lenkeinrichtung 21 bereitgestellt werden, und die ebenfalls Fahrdaten bilden. Die Lenkeinrichtung 21 kann auf an sich bekannte Weise von einem Fahrer des Fahrzeuges 100 bedient werden, oder die Lenkeinrichtung 21 betrifft eine autonome Fahreinrichtung des Fahrzeuges 100.

Die über die Datenleitung 14 zwischen den Achssteuereinheiten 12 und dem Zentralsteuermodul 13 ausgetauschten Lenkinformationen betreffen Lenkwinkel-Istdaten, die von den Achssteuereinheiten 12 an das Zentralsteuermodul 13 übermittelt werden, und die Daten betreffen Lenkwinkel-Solldaten 17, die vom Zentralsteuermodul 13 an die Achssteuereinheiten 12 übermittelt werden. Weiterhin weisen die Gelenke 29 Gelenksteuereinrichtungen 30 auf, die ebenfalls im Datenaustausch mit der Datenleitung 14 und insofern mit dem Zentralsteuermodul 13 stehen.

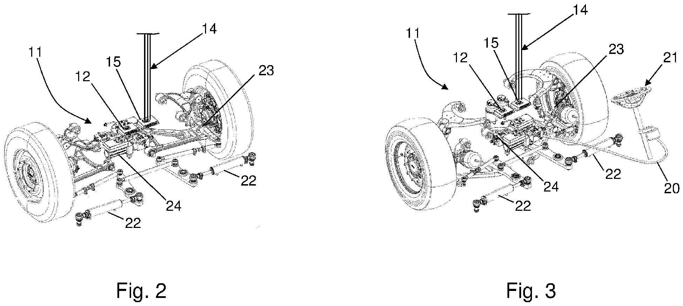

Die Figuren 2 und 3 zeigen Beispiele von Achseinheiten 11, wobei die Achseinheit 11 gemäß der Figur 3 eine Lenkeinrichtung 21 aufweist, und sich dadurch von der Achseinheit 11 gemäß Figur 2 unterscheidet.

Die Achseinheiten 11 weisen als wesentlichen Bestandteil eine Achssteuereinheit 12 auf, die über eine Datenschnittstelle 15 verfügt. Die Datenschnittstelle 15 ist mit der Datenleitung 14 zwecks Datenübermittlung verbunden. Die Achssteuereinheiten 12 stehen mit Einrichtungen der Achseinheit 11 in Verbindung, von denen in nicht abschließender Weise mehrere Sensoren und Aktoren gezeigt sind. Beispielsweise weisen die Achseinheiten 11 Lenkaktoren 22 auf, die über die Achssteuereinheit 12 angesteuert werden können, wobei beispielsweise ein aktueller Lenkwinkel der Achseinheit 11 über Sensoren 23 erfasst und von der Achssteuereinheit 12 verarbeitet werden kann. Weitere Bestandteile der Achseinheiten 11 sind beispielsweise eine Hydraulikeinheit 24, über die beispielsweise die Lenkaktoren 22 angetrieben werden können.

Die Achssteuereinheit 12 steht mit der Datenschnittstelle 15 in Verbindung, die die Lenkwinkeldaten über die Datenleitung 14 dem nicht dargestellten Zentralsteuermodul zuführt und entsprechende Lenkwinkeldaten vom Zentralsteuermodul empfängt.

Figur 3 zeigt eine Achseinheit 11, die beispielsweise an einem vorderen oder an einem hinteren Ende des Fahrzeuges 100 eingerichtet sein kann. Die Achseinheit 11 weist eine Lenkeinrichtung 21 auf, die Lenkinformationen 20 an die Achssteuereinheit 12 übermittelt. Damit kann ein Fahrer oder ein autonomes Fahrsystem einen Weg vorgeben, entlang dem das Fahrzeug 100 fahren soll.

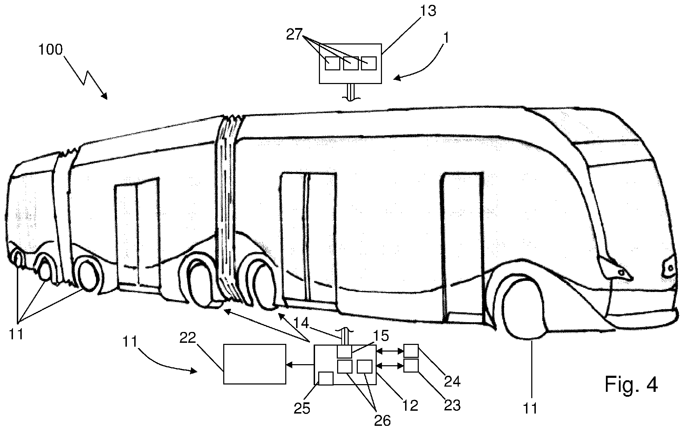

Figur 4 zeigt schließlich in einer weiteren schematischen Ansicht das Lenkungssteuersystem 1 in Verbindung mit dem Fahrzeug 100. Das Fahrzeug 100 ist mit den mehreren Achseinheiten 11 gezeigt, wobei in schematischer Weise eine Achseinheit 11 mit den zugehörigen Komponenten derselben vergrößert dargestellt ist. Oberhalb des Fahrzeuges 100 ist das Zentralsteuermodul 13 dargestellt, wobei eine Datenleitung 14 zwischen dem Zentralsteuermodul 13 und der Achseinheit 11 schematisch angedeutet ist. Die dargestellte Achseinheit 11 ist insofern mehrfach vorhanden, um gemeinsam mit dem Zentralsteuermodul 13 das Lenkungssteuersystem 1 zu bilden.

Als wesentlicher elektronischer Bestandteil weist die Achseinheit 11 die Achssteuereinheit 12 auf, die über die Datenschnittstelle 15 mit der Datenleitung 14 verbunden ist.

Das Zentralsteuermodul 13 ist bei dem dargestellten Ausführungsbeispiel auf Basis von drei Zentralrecheneinheiten 27 aufgebaut, die baulich identisch zueinander ausgeführt sein können oder die insbesondere jeweils eine voneinander abweichende Hardware aufweisen, wobei die Zentralrecheneinheiten 27 nebeneinander und insbesondere unabhängig voneinander betrieben werden. Bei unterschiedlicher Hardware kann dabei die Betriebssicherheit noch weiter erhöht werden, wobei auf jedem der Zentralrecheneinheiten 27 das softwarebasierte, fahrzeugspezifische Bewegungsmodell installiert und betrieben werden kann, sodass mit drei vorhandenen Zentralrecheneinheiten 27 und die damit einhergehende Redundanz eine sehr hohe Betriebssicherheit des Zentralsteuermoduls 13 erreicht wird. Im Rahmen der Erfindung kann das Zentralsteuermodul 13 auch auf nur einer einzigen Zentralrecheneinheit 27 oder auf zwei Zentralrecheneinheiten 27 oder mehr als drei Zentralrecheneinheiten 27 ausgebildet und aufgebaut sein.

Die Achseinheit 11 weist die Achssteuereinheit 12 auf, die beispielhaft auf Basis von zwei Recheneinheiten 26 aufgebaut ist, die auf gleiche Weise redundant betrieben werden können. Auch die gezeigten zwei Recheneinheiten 26 zur Bildung der Achssteuereinheit 12 können unterschiedliche Hardwarekonfigurationen aufweisen oder diese sind identisch zueinander ausgebildet. Werden über die Datenleitung 14 Lenkinformationen mit dem Zentralsteuermodul 13 ausgetauscht, so kann die Plausibilität der ausgetauschten Daten überwacht werden mit einer Achsbetriebssicherheitseinrichtung 25.

Die Achseinheit 11 weist beispielsweise einen Lenkaktor 22 zur Ausführung der Lenkbewegung der Räder, einen Sensor 23 zur Erfassung eines aktuellen Lenkwinkels der Räder sowie eine Hydraulikeinheit 24 auf, wobei vorzugsweise sämtliche peripheren Einrichtungen von der Achssteuereinheit 12 gesteuert werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Fahrzeug

- 1: Lenkungssteuersystem

- 10: Fahrzeugteil
- 11: Achseinheit
- 12: Achssteuereinheit
- 13: Zentralsteuermodul
- 14: Datenleitung
- 15: Datenschnittstelle
- 16: Lenkwinkel-Istdaten
- 17: Lenkwinkel-Solldaten
- 18: Steuerschnittstelle
- 19: Fahrdaten
- 20: Lenkinformation
- 21: Lenkeinrichtung
- 22: Lenkaktor
- 23: Sensor
- 24: Hydraulikeinheit
- 25: Achsbetriebssicherheitseinrichtung
- 26: Recheneinheit
- 27: Zentralrecheneinheit
- 28: Datenübertragungsmittel
- 29: Gelenk
- 30: Gelenksteuereinrichtung

## Patentansprüche

1. Lenkungssteuersystem (1) zum Steuern der Lenkung eines mehrgliedrigen Fahrzeugs (100) mit mehreren beweglich miteinander verbundenen Fahrzeugteilen (10) und mehreren lenkbaren Achseinheiten (11), aufweisend
- eine erste Achssteuereinheit (12) zur Anordnung in Verbindung mit einer ersten lenkbaren Achseinheit (11) und
- wenigstens eine zweite Achssteuereinheit (12) zur Anordnung in Verbindung mit wenigstens einer zweiten lenkbaren Achseinheit (11),
- wobei
- das Lenkungssteuersystem (1) ein Zentralsteuermodul (13) aufweist, welches mit den mehreren Achssteuereinheiten (12) über eine gemeinsame Datenleitung (14) zum Austausch von Lenkwinkeldaten verbunden ist,
- wobei die Achssteuereinheiten (12) zur Kommunikation über die Datenleitung (14) Datenschnittstellen (15) aufweisen, die zur Übertragung zueinander identischer Datenformate ausgebildet sind, wodurch das Lenkungssteuersystem (1) mit einer variablen Anzahl von einbindbaren Achssteuereinheiten (12) modular aufbaubar ist,
- wobei von jeder der Achssteuereinheiten (12) achsspezifische Lenkwinkel-Istdaten (16) an das Zentralsteuermodul (13) übermittelbar sind und von dem Zentralsteuermodul (13) achsspezifische Lenkwinkel-Solldaten (17) an jede der Achssteuereinheiten (12) übermittelbar sind,
**dadurch gekennzeichnet, dass**
das Zentralsteuermodul (13) ein softwarebasiertes fahrzeugspezifisches Bewegungsmodell aufweist, das dazu ausgebildet ist, die achsspezifischen Lenkwinkel-Solldaten (17) zur Ausgabe an jede der Achssteuereinheiten (12) auf Basis des fahrzeugspezifischen Bewegungsmodells zu ermitteln, wobei das fahrzeugspezifische Bewegungsmodell auf Fahrzeugdaten basiert, wenigstens umfassend:
- die Abmessungen und/oder die Masse des Fahrzeugs (100),
- die Achsdaten, wenigstens umfassend Achslasten und/oder die Zahl der lenkbaren und/der nicht lenkbaren Achseinheiten (11), und/oder
- Gelenkdaten umfassend die Gelenkwinkel und/oder die Anzahl der Gelenke (29).

2. Lenkungssteuersystem (1) nach Anspruch 1,
**dadurch gekennzeichnet, dass**
die Achssteuereinheiten (12) baulich und/oder elektronisch identisch zueinander ausgebildet und/oder voneinander unabhängig betreibbar sind.

3. Lenkungssteuersystem (1) nach einem der vorhergehenden Ansprüche,
**dadurch gekennzeichnet, dass**
- das Zentralsteuermodul (13) eine Steuerschnittstelle (18) aufweist, über die Fahrdaten (19) des Fahrzeugs (100) an das Zentralsteuermodul (13) übermittelbar sind, wobei die Fahrdaten (19) wenigstens eine Fahrgeschwindigkeit, eine Fahrtrichtung und/oder eine Lenkinformation (20) umfassen, wobei optional eine von einem Fahrer und/oder einer autonomen Fahreinrichtung des Fahrzeugs (100) gesteuerte Lenkeinrichtung (21) die Lenkinformation (20) bereitstellt; und/oder
- das Zentralsteuermodul (13) eine Steuerschnittstelle zur Übertragung von Zentralsteuermoduldaten an eine Fahrzeugsteuerung aufweist, wobei die Zentralsteuermoduldaten Statusinformationen und/oder Brems-, Geschwindigkeits-, und/oder Leistungsinformationen umfassen.

4. Lenkungssteuersystem (1) nach einem der vorhergehenden Ansprüche,
**dadurch gekennzeichnet, dass**
die lenkbaren Achseinheiten (11) Achseinrichtungen umfassend wenigstens einen Lenkaktor (22), wenigstens einen Sensor (23), wenigstens eine Hydraulikeinheit (24) und/oder wenigstens eine elektronische Achsbetriebssicherheitseinrichtung (25) aufweisen, wobei die Achssteuereinheit (12) der lenkbaren Achseinheit (11) die Achseinrichtungen autonom steuert und/oder überwacht.

5. Lenkungssteuersystem (1) nach einem der vorhergehenden Ansprüche,
**dadurch gekennzeichnet, dass**
die Achssteuereinheit (12) wenigstens zwei zueinander redundant ausgebildete Recheneinheiten (26) aufweist und/oder das Zentralsteuermodul (13) wenigstens zwei und bevorzugt drei zueinander redundant ausgebildete Zentralrecheneinheiten (27) aufweist.

6. Lenkungssteuersystem (1) nach einem der vorhergehenden Ansprüche,
**dadurch gekennzeichnet, dass**
die Datenleitung (14) und die jeweiligen Datenschnittstellen (15) der Achssteuereinheiten (12) zueinander redundant ausgebildete Datenübertragungsmittel (28) aufweisen.

7. Lenkungssteuersystem (1) nach einem der vorhergehenden Ansprüche,
**dadurch gekennzeichnet, dass**
das Zentralsteuermodul (13) mindestens ein Überwachungsmittel aufweist, mit dem die Plausibilität der von den Achssteuereinheiten (12) übermittelten Lenkwinkel-Istdaten (16) überwachbar ist, und/oder die Achssteuereinheiten (12) mindestens ein Überwachungsmittel aufweisen, mit dem die Plausibilität der von dem Zentralsteuermodul (13) übermittelten Lenkwinkel-Solldaten (17) überwachbar ist.

8. Lenkungssteuersystem (1) nach einem der vorhergehenden Ansprüche,
**dadurch gekennzeichnet, dass**
die Fahrzeugteile (10) über Gelenke (29) miteinander verbunden sind, wobei die Gelenke (29) Gelenksteuereinrichtungen (30) aufweisen, die an die Datenleitung (14) angebunden sind und mit dem Zentralsteuermodul (13) in Datenaustausch stehen, insbesondere um mittels Winkelsensoren an den Gelenken (29) erfassbare Gelenkwinkelinformationen an das Zentralsteuermodul (13) zu übersenden.

9. Mehrgliedriges Fahrzeug (100) mit mehreren beweglich miteinander verbundenen Fahrzeugteilen (10) und mehreren lenkbaren Achseinheiten (11), und mit einem Lenkungssteuersystem (1) zum Steuern der Lenkung des mehrgliedrigen Fahrzeugs (100), wobei das Lenkungssteuersystem (1) aufweist:
- eine erste Achssteuereinheit (12), die in Verbindung mit einer ersten lenkbaren Achseinheit (11) angeordnet ist, und
- wenigstens eine zweite Achssteuereinheit (12), die in Verbindung mit wenigstens einer zweiten lenkbaren Achseinheit (11) angeordnet ist,
wobei
- das Lenkungssteuersystem (1) ein Zentralsteuermodul (13) aufweist, welches mit den mehreren Achssteuereinheiten (12) über eine gemeinsame Datenleitung (14) zum Austausch von Lenkwinkeldaten verbunden ist,
- wobei die Achssteuereinheiten (12) zur Kommunikation über die Datenleitung (14) Datenschnittstellen (15) aufweisen, die zur Übertragung zueinander identischer Datenformate ausgebildet sind, wodurch das Lenkungssteuersystem (1) mit einer variablen Anzahl von einbindbaren Achssteuereinheiten (12) modular aufgebaut ist,
- wobei von jeder der Achssteuereinheiten (12) achsspezifische Lenkwinkel-Istdaten (16) an das Zentralsteuermodul (13) übermittelbar sind und von dem Zentralsteuermodul (13) achsspezifische Lenkwinkel-Solldaten (17) an jede der Achssteuereinheiten (12) übermittelbar sind,
**dadurch gekennzeichnet, dass**
das Zentralsteuermodul (13) ein softwarebasiertes fahrzeugspezifisches Bewegungsmodell aufweist, das dazu ausgebildet ist, die achsspezifischen Lenkwinkel-Solldaten (17) zur Ausgabe an jede der Achssteuereinheiten (12) auf Basis des fahrzeugspezifischen Bewegungsmodells zu ermitteln, wobei das fahrzeugspezifische Bewegungsmodell auf Fahrzeugdaten basiert, wenigstens umfassend:
- die Abmessungen und/oder die Masse des Fahrzeugs (100),
- die Achsdaten, wenigstens umfassend Achslasten und/oder die Zahl der lenkbaren und/der nicht lenkbaren Achseinheiten (11), und/oder
- Gelenkdaten umfassend die Gelenkwinkel und/oder die Anzahl der Gelenke (29).

10. Verfahren zum Aufbau eines Lenkungssteuersystems (1), das zum Steuern der Lenkung eines mehrgliedrigen Fahrzeugs (100) mit mehreren beweglich miteinander verbundenen Fahrzeugteilen (10) und mehreren lenkbaren Achseinheiten (11) eingerichtet wird, wobei das Verfahren wenigstens die folgenden Schritte aufweist:
- modulares Anordnen einer ersten Achssteuereinheit (12) in Verbindung mit einer ersten lenkbaren Achseinheit (11) und
- modulares Anordnen wenigstens einer zweiten Achssteuereinheit (12) in Verbindung mit wenigstens einer zweiten lenkbaren Achseinheit (11),
- wobei die Achssteuereinheiten (12) betreffend ihre Anbindung an eine Datenleitung (14) untereinander austauschbar ausgebildet sind und
- wobei ein Zentralsteuermodul (13) eingerichtet wird, das über die Datenleitung (14) mit den Achssteuereinheiten (12) Lenkinformationen austauscht, wobei
- bei Inbetriebnahme des Lenkungssteuersystems (1) die Achssteuereinheiten (12) unabhängig voneinander und unabhängig von ihrer Anzahl betrieben werden, indem diese mit dem Zentralsteuermodul (13) über die gemeinsame Datenleitung (14) kommunizieren,
- von jeder der Achssteuereinheiten (12) achsspezifische Lenkwinkel-Istdaten (16) an das Zentralsteuermodul (13) übermittelt werden und von dem Zentralsteuermodul (13) achsspezifische Lenkwinkel-Solldaten (17) an jede der Achssteuereinheiten (12) übermittelt werden,
- wobei das Zentralsteuermodul (13) ein softwarebasiertes fahrzeugspezifisches Bewegungsmodell aufweist, mit welchem die achsspezifischen Lenkwinkel-Solldaten (17) zur Ausgabe an jede der Achssteuereinheiten (12) auf Basis des fahrzeugspezifischen Bewegungsmodells ermittelt werden, wobei das fahrzeugspezifische Bewegungsmodell auf Fahrzeugdaten basiert, wenigstens umfassend:
- die Abmessungen und/oder die Masse des Fahrzeugs (100),
- die Achsdaten, wenigstens umfassend Achslasten und/oder die Zahl der lenkbaren und/der nicht lenkbaren Achseinheiten (11), und/oder
- Gelenkdaten umfassend die Gelenkwinkel und/oder die Anzahl der Gelenke (29).

11. Verfahren nach Anspruch 10,
**dadurch gekennzeichnet, dass**
die Achssteuereinheiten (12) ausschließlich mit dem Zentralsteuermodul (13) kommunizieren.

12. Verfahren nach einem der Ansprüche 10 oder 11,
**dadurch gekennzeichnet, dass**
die Fahrzeugteile (10) über Gelenke (29) miteinander verbunden sind, wobei die Gelenke (29) jeweils Gelenksteuereinrichtungen (30) aufweisen, die Gelenkdaten an das Zentralsteuermodul (13) übermitteln, welche wenigstens eine der folgenden Informationen umfassen: Lenkwinkeldaten, Dämpfungsdaten, Knickwinkeldaten, Querversatzdaten, Querkraftdaten.

## Claims

1. Steering control system (1) for controlling steering of a multi-unit vehicle (100) having a plurality of movably interconnected vehicle parts (10) and a plurality of steerable axle units (11), comprising
- a first axle control unit (12) for arrangement in connection with a first steerable axle unit (11), and
- at least one second axle control unit (12) for arrangement in connection with at least one second steerable axle unit (11),
- wherein
- the steering control system (1) has a central control module (13) which is connected to the plurality of axle control units (12) via a common data line (14) for exchanging steering angle data,
- wherein the axle control units (12) have data interfaces (15) for communication via the data line (14), which interfaces are designed to transmit mutually identical data formats, as a result of which the steering control system (1) can have a modular design with a variable number of axle control units (12) which can be integrated,
- wherein axle-specific steering angle actual data (16) can be transmitted from each of the axle control units (12) to the central control module (13), and axle-specific steering angle target data (17) can be transmitted from the central control module (13) to each of the axle control units (12),
**characterized in that**
the central control module (13) has a software-based vehicle-specific movement model which is designed to determine the axle-specific steering angle target data (17) for outputting to each of the axle control units (12) on the basis of the vehicle-specific movement model, wherein the vehicle-specific movement model is based on vehicle data, at least comprising:
- the dimensions and/or mass of the vehicle (100),
- the axle data, at least comprising axle loads and/or the number of steerable and/or non-steerable axle units (11), and/or
- joint data comprising joint angles and/or the number of joints (29).

2. Steering control system (1) according to claim 1,
**characterized in that**
the axle control units (12) are structurally and/or electronically identical to one another and/or can be operated independently of one another.

3. Steering control system (1) according to either of the preceding claims,
**characterized in that**
- the central control module (13) has a control interface (18) via which driving data (19) of the vehicle (100) can be transmitted to the central control module (13), wherein the driving data (19) comprise at least a driving speed, a driving direction and/or steering information (20), wherein optionally a steering device (21) controlled by a driver and/or an autonomous driving device of the vehicle (100) provides the steering information (20); and/or
- the central control module (13) has a control interface for transmitting central control module data to a vehicle controller, wherein the central control module data comprise status information and/or braking, speed and/or power information.

4. Steering control system (1) according to any of the preceding claims,
**characterized in that**
the steerable axle units (11) have axle devices comprising at least one steering actuator (22), at least one sensor (23), at least one hydraulic unit (24) and/or at least one electronic axle operation safety device (25), wherein the axle control unit (12) of the steerable axle unit (11) autonomously controls and/or monitors the axle devices.

5. Steering control system (1) according to any of the preceding claims,
**characterized in that**
the axle control unit (12) has at least two computing units (26) which are designed to be redundant with respect to one another, and/or the central control module (13) has at least two and preferably three central computing units (27) which are designed to be redundant with respect to one another.

6. Steering control system (1) according to any of the preceding claims,
**characterized in that**
the data line (14) and the respective data interfaces (15) of the axle control units (12) have data transmission means (28) which are designed to be redundant with respect to one another.

7. Steering control system (1) according to any of the preceding claims,
**characterized in that**
the central control module (13) has at least one monitoring means, by means of which the plausibility of the steering angle actual data (16) transmitted by the axle control units (12) can be monitored, and/or the axle control units (12) have at least one monitoring means, by means of which the plausibility of the steering angle target data (17) transmitted by the central control module (13) can be monitored.

8. Steering control system (1) according to any of the preceding claims,
**characterized in that**
the vehicle parts (10) are connected to one another via joints (29), wherein the joints (29) have joint control devices (30) which are connected to the data line (14) and are in data exchange with the central control module (13), in particular in order to transmit joint angle information, which can be detected by means of angle sensors at the joints (29), to the central control module (13).

9. Multi-unit vehicle (100) comprising a plurality of movably interconnected vehicle parts (10) and a plurality of steerable axle units (11), and comprising a steering control system (1) for controlling the steering of the multi-unit vehicle (100), wherein the steering control system (1) has:
- a first axle control unit (12) arranged in connection with a first steerable axle unit (11), and
- at least one second axle control unit (12) arranged in connection with at least one second steerable axle unit (11),
wherein
- the steering control system (1) has a central control module (13) which is connected to the plurality of axle control units (12) via a common data line (14) for exchanging steering angle data,
- wherein the axle control units (12) have data interfaces (15) for communication via the data line (14), which interfaces are designed to transmit mutually identical data formats, as a result of which the steering control system (1) has a modular design with a variable number of linkable axle control units (12) which can be integrated,
- wherein axle-specific steering angle actual data (16) can be transmitted from each of the axle control units (12) to the central control module (13), and axle-specific steering angle target data (17) can be transmitted from the central control module (13) to each of the axle control units (12),
**characterized in that**
the central control module (13) has a software-based vehicle-specific movement model which is designed to determine the axle-specific steering angle target data (17) for outputting to each of the axle control units (12) on the basis of the vehicle-specific movement model, wherein the vehicle-specific movement model is based on vehicle data, at least comprising:
- the dimensions and/or mass of the vehicle (100),
- the axle data, at least comprising axle loads and/or the number of steerable and/or non-steerable axle units (11), and/or
- joint data comprising joint angles and/or the number of joints (29).

10. Method for constructing a steering control system (1) which is designed to control the steering of a multi-unit vehicle (100) having a plurality of movably interconnected vehicle parts (10) and a plurality of steerable axle units (11), wherein the method comprises at least the following steps:
- modular arrangement of a first axle control unit (12) in connection with a first steerable axle unit (11) and
- modular arrangement of at least one second axle control unit (12) in connection with at least one second steerable axle unit (11),
- wherein the axle control units (12) are designed to be interchangeable with one another with regard to their connection to a data line (14) and
- wherein a central control module (13) is configured which exchanges steering information with the axle control units (12) via the data line (14), wherein
- when the steering control system (1) is put into operation, the axle control units (12) are operated independently of one another and independently of their number by communicating with the central control module (13) via the common data line (14),
- axle-specific steering angle actual data (16) are transmitted from each of the axle control units (12) to the central control module (13), and axle-specific steering angle target data (17) are transmitted from the central control module (13) to each of the axle control units (12),
- wherein the central control module (13) has a software-based vehicle-specific movement model, by means of which the axle-specific steering angle target data (17) for outputting to each of the axle control units (12) are determined on the basis of the vehicle-specific movement model, wherein the vehicle-specific movement model is based on vehicle data, at least comprising:
- the dimensions and/or mass of the vehicle (100),
- the axle data, at least comprising axle loads and/or the number of steerable and/or non-steerable axle units (11), and/or
- joint data comprising joint angles and/or the number of joints (29).

11. Method according to claim 10,
**characterized in that**
the axle control units (12) communicate exclusively with the central control module (13).

12. Method according to any of claims 10 to 11,
**characterized in that**
the vehicle parts (10) are connected to one another via joints (29), wherein the joints (29) each have joint control devices (30) which transmit joint data to the central control module (13), which data comprise at least one of the following pieces of information: steering angle data, damping data, articulation angle data, lateral offset data, lateral force data.

## Revendications

1. Système de commande de direction (1) permettant de commander la direction d'un véhicule (100) à plusieurs éléments comportant plusieurs pièces de véhicule (10) reliées entre elles de manière mobile et plusieurs unités d'essieu (11) dirigeables, présentant
- une première unité de commande d'essieu (12) pour l'agencement en liaison avec une première unité d'essieu (11) dirigeable et
- au moins une seconde unité de commande d'essieu (12) pour un agencement en liaison avec au moins une seconde unité d'essieu (11) dirigeable,
- dans lequel
- le système de commande de direction (1) présente un module de commande central (13), lequel est relié aux multiples unités de commande d'essieu (12) par l'intermédiaire d'une ligne de données (14) commune pour l'échange de données d'angle de direction,
- dans lequel les unités de commande d'essieu (12) présentent, pour la communication par l'intermédiaire de la ligne de données (14), des interfaces de données (15), qui sont conçues pour la transmission de formats de données identiques les uns aux autres, moyennant quoi le système de commande de direction (1) peut être construit de manière modulaire avec un nombre variable d'unités de commande d'essieu (12) pouvant être intégrées,
- dans lequel des données réelles d'angle de direction (16) spécifiques à l'essieu peuvent être transmises par chacune des unités de commande d'essieu (12) au module de commande central (13) et des données de consigne d'angle de direction (17) spécifiques à l'essieu peuvent être transmises par le module de commande central (13) à chacune des unités de commande d'essieu (12),
**caractérisé en ce que**
le module de commande central (13) présente un modèle de mouvement spécifique au véhicule basé sur un logiciel, qui est conçu pour déterminer les données de consigne d'angle de direction (17) spécifiques à l'essieu pour la sortie vers chacune des unités de commande d'essieu (12) sur la base du modèle de mouvement spécifique au véhicule, dans lequel le modèle de mouvement spécifique au véhicule est basé sur des données de véhicule, comprenant au moins :
- les dimensions et/ou la masse du véhicule (100),
- les données d'essieu, comprenant au moins les charges d'essieu et/ou le nombre d'unités d'essieu (11) dirigeables et/ou non dirigeables, et/ou
- des données d'articulation comprenant les angles d'articulation et/ou le nombre d'articulations (29).

2. Système de commande de direction (1) selon la revendication 1,
**caractérisé en ce que**
les unités de commande d'essieu (12) sont identiques les unes aux autres sur le plan de la construction et/ou de l'électronique et/ou peuvent être exploitées indépendamment les unes des autres.

3. Système de commande de direction (1) selon l'une des revendications précédentes,
**caractérisé en ce que**
- le module de commande central (13) présente une interface de commande (18) par l'intermédiaire de laquelle des données de conduite (19) du véhicule (100) peuvent être transmises au module de commande central (13), dans lequel les données de conduite (19) comprennent au moins une vitesse de conduite, une direction de conduite et/ou une information de direction (20), dans lequel un dispositif de direction (21) commandé par un conducteur et/ou un dispositif de conduite autonome du véhicule (100) met en option l'information de direction (20) à disposition ; et/ou
- le module de commande central (13) présente une interface de commande pour la transmission de données de module de commande central à une commande de véhicule, dans lequel les données de module de commande central comprennent des informations d'état et/ou des informations de frein, de vitesse et/ou de puissance.

4. Système de commande de direction (1) selon l'une des revendications précédentes,
**caractérisé en ce que**
les unités d'essieu (11) dirigeables présentent des dispositifs d'essieu comprenant au moins un actionneur de direction (22), au moins un capteur (23), au moins une unité hydraulique (24) et/ou au moins un dispositif électronique de sécurité de fonctionnement d'essieu (25), dans lequel l'unité de commande d'essieu (12) de l'unité d'essieu (11) dirigeable commande et/ou surveille de manière autonome les dispositifs d'essieu.

5. Système de commande de direction (1) selon l'une des revendications précédentes,
**caractérisé en ce que**
l'unité de commande d'essieu (12) présente au moins deux unités de calcul (26) conçues de manière redondantes l'une par rapport à l'autre et/ou le module de commande central (13) présente au moins deux et de préférence trois unités de calcul central (27) conçues de manière redondante les unes par rapport aux autres.

6. Système de commande de direction (1) selon l'une des revendications précédentes,
**caractérisé en ce que**
la ligne de données (14) et les interfaces de données (15) respectives des unités de commande d'essieu (12) présentent des moyens de transmission de données (28) conçus de manière redondante les uns par rapport aux autres.

7. Système de commande de direction (1) selon l'une des revendications précédentes,
**caractérisé en ce que**
le module de commande central (13) présente au moins un moyen de surveillance avec lequel la plausibilité des données réelles d'angle de direction (16) transmises par les unités de commande d'essieu (12) peut être surveillée, et/ou les unités de commande d'essieu (12) présentent au moins un moyen de surveillance avec lequel la plausibilité des données de consigne d'angle de direction (17) transmises par le module de commande central (13) peut être surveillée.

8. Système de commande de direction (1) selon l'une des revendications précédentes,
**caractérisé en ce que**
les pièces de véhicule (10) sont reliées entre elles par des articulations (29), dans lequel les articulations (29) présentent des dispositifs de commande d'articulation (30) qui sont reliés à la ligne de données (14) et sont en échange de données avec le module de commande central (13), en particulier pour transférer au module de commande central (13) des informations d'angle d'articulation pouvant être détectées à l'aide de capteurs d'angle sur les articulations (29).

9. Véhicule (100) à plusieurs éléments comportant plusieurs pièces de véhicule (10) reliées entre elles de manière mobile et plusieurs unités d'essieu (11) dirigeables, et comportant un système de commande de direction (1) pour la commande de la direction du véhicule (100) à plusieurs éléments, dans lequel le système de commande de direction (1) présente :
- une première unité de commande d'essieu (12), qui est disposée en liaison avec une première unité d'essieu (11) dirigeable, et
- au moins une seconde unité de commande d'essieu (12), qui est disposée en liaison avec au moins une seconde unité d'essieu (11) dirigeable,
dans lequel
- le système de commande de direction (1) présente un module de commande central (13), lequel est relié aux multiples unités de commande d'essieu (12) par l'intermédiaire d'une ligne de données (14) commune pour l'échange de données d'angle de direction,
- dans lequel les unités de commande d'essieu (12) présentent, pour la communication par l'intermédiaire de la ligne de données (14), des interfaces de données (15), qui sont conçues pour la transmission de formats de données identiques les uns aux autres, moyennant quoi le système de commande de direction (1) est construit de manière modulaire avec un nombre variable d'unités de commande d'essieu (12) pouvant être intégrées,
- dans lequel des données réelles d'angle de direction (16) spécifiques à l'essieu peuvent être transmises par chacune des unités de commande d'essieu (12) au module de commande central (13) et des données de consigne d'angle de direction (17) spécifiques à l'essieu peuvent être transmises par le module de commande central (13) à chacune des unités de commande d'essieu (12),
**caractérisé en ce que**
le module de commande central (13) présente un modèle de mouvement spécifique au véhicule basé sur un logiciel, qui est conçu pour déterminer les données de consigne d'angle de direction (17) spécifiques à l'essieu pour la sortie vers chacune des unités de commande d'essieu (12) sur la base du modèle de mouvement spécifique au véhicule, dans lequel le modèle de mouvement spécifique au véhicule est basé sur des données de véhicule, comprenant au moins :
- les dimensions et/ou la masse du véhicule (100),
- les données d'essieu, comprenant au moins les charges d'essieu et/ou le nombre d'unités d'essieu (11) dirigeables et/ou non dirigeables, et/ou
- des données d'articulation comprenant les angles d'articulation et/ou le nombre d'articulations (29).

10. Procédé pour la construction d'un système de commande de direction (1) qui est mis en place pour commander la direction d'un véhicule (100) à plusieurs éléments comportant plusieurs pièces de véhicule (10) reliées de manière mobile les unes aux autres et plusieurs unités d'essieu (11) dirigeables, dans lequel le procédé présente au moins les étapes suivantes :
- l'agencement modulaire d'une première unité de commande d'essieu (12) en liaison avec une première unité d'essieu (11) dirigeable et
- l'agencement modulaire d'au moins une seconde unité de commande d'essieu (12) en liaison avec au moins une seconde unité d'essieu (11) dirigeable,
- dans lequel les unités de commande d'essieu (12) sont conçues de manière interchangeable en ce qui concerne leur liaison à une ligne de données (14) et
- dans lequel un module de commande central (13) est mis en place, qui échange des informations de direction avec les unités de commande d'essieux (12) par l'intermédiaire de la ligne de données (14), dans lequel
- lors de la mise en service du système de commande de direction (1), les unités de commande d'essieu (12) sont exploitées indépendamment les unes des autres et indépendamment de leur nombre, en ce que celles-ci communiquent avec le module de commande central (13) par l'intermédiaire de la ligne de données (14) commune,
- des données réelles d'angle de direction (16) spécifiques à l'essieu sont transmises par chacune des unités de commande d'essieu (12) au module de commande central (13) et des données de consigne d'angle de direction (17) spécifiques à l'essieu sont transmises par le module de commande central (13) à chacune des unités de commande d'essieu (12),
- dans lequel le module de commande central (13) présente un modèle de mouvement spécifique au véhicule basé sur un logiciel, avec lequel les données de consigne d'angle de direction (17) spécifiques à l'essieu sont déterminées pour la sortie vers chacune des unités de commande d'essieu (12) sur la base du modèle de mouvement spécifique au véhicule, dans lequel le modèle de mouvement spécifique au véhicule est basé sur des données de véhicule, comprenant au moins :
- les dimensions et/ou la masse du véhicule (100),
- les données d'essieu, comprenant au moins les charges d'essieu et/ou le nombre d'unités d'essieu (11) dirigeables et/ou non dirigeables, et/ou
- des données d'articulation comprenant les angles d'articulation et/ou le nombre d'articulations (29).

11. Procédé selon la revendication 10,
**caractérisé en ce que**
les unités de commande d'essieu (12) communiquent exclusivement avec le module de commande central (13).

12. Procédé selon l'une des revendications 10 ou 11,
**caractérisé en ce que**
les pièces de véhicule (10) sont reliées entre elles par l'intermédiaire d'articulations (29), dans lequel les articulations (29) présentent respectivement des dispositifs de commande d'articulation (30) qui transmettent au module de commande central (13) des données d'articulation qui comprennent au moins l'une des informations suivantes : données d'angle de direction, données d'amortissement, données d'angle de cassure, données de déport transversal, données d'effort transversale.
